# EUROPÄISCHE PATENTSCHRIFT

(11) **EP 0 899 289 B1**
(45) Veröffentlichungstag und Bekanntmachung des Hinweises auf die Patenterteilung: **03.11.2004**
(21) Anmeldenummer: 97114997.6
(22) Anmeldetag: 29.08.1997
(51) Int. Cl.: C08J 3/22

(54) **Verfahren zur Herstellung von duroplastischen Formmassen**
Process for preparing thermosetting moulding masses
Procédé de préparation de masses à mouler thermodurcissables

(43) Veröffentlichungstag der Anmeldung: 03.03.1999
(73) Patentinhaber: Bakelite AG, 58642 Iserlohn-Letmathe (DE)
(72) Erfinder: Knorr, Herbert, 45219 Essen (DE); Adolphs, Peter, Dr., 58708 Menden (DE); Nolte, Werner, Dr., 37581 Bad-Gandersheim (DE); Rau, Bernd, 58675 Hemer (DE); Müller, Bernhard, 58708 Menden (DE); Michael, Hermann, 58239 Schwerte (DE)

(56) Entgegenhaltungen:
- EP-A- 0 309 410
- DE-A- 4 101 048
- DE-A- 4 320 209
- GB-A- 786 898
- PATENT ABSTRACTS OF JAPAN vol. 096, no. 006, 28.Juni 1996 & JP 08 034858 A (SHIN ETSU CHEM CO LTD), 6.Februar 1996,
- PATENT ABSTRACTS OF JAPAN vol. 012, no. 433 (C-543), 15.November 1988 & JP 63 161018 A (SOMAR CORP), 4.Juli 1988,

## Beschreibung

Die Erfindung betrifft ein Verfahren zur Herstellung von Formmassen, die als Bindemittel Harze bzw. Harz-Härter-Gemische enthalten, die oberhalb einer Anspringtemperatur, die oberhalb ihres Schmelzpunktes liegt, härten. Das wichtigste derartige Bindemittel ist ein Novolak-Hexamethylentetramin-Gemisch.

Für entsprechende Phenolharz-Formmassen gibt es derzeit drei prinzipiell unterschiedliche Herstellungsverfahren (vergl. Kunststoff-Handbuch, Bd. 10, Duroplaste, 2. Auflage, Hanser Verlag 1988, S. 211-213): Das Flüssigharzverfahren, bei dem die Füllstoffe mit Harz-Lösung imprägniert werden und die so erhaltenen feuchten Massen getrocknet und zum gewünschten Kondensationsgrad weiterkondensiert werden. Das Arbeiten mit entsprechenden feuchten Massen ist in der betrieblichen Praxis unerwünscht, da deren saubere Handhabung schwierig ist, und das Trocknen einen zusätzlichen energieaufwendigen Arbeitsgang darstellt.

Im Turbomischer-Verfahren werden die Komponenten der Formmasse in hochtourigen Mischern mit kurzen Mischzeiten homogenisiert. Dabei ergibt sich ein hoher Energieeintrag durch den Mischer, der schlecht reguliert und nur ungleichmäßig verteilt werden kann. Somit resultieren Probleme in der Reproduzierbarkeit. Insbesondere ist der Kondensationsgrad der vorkondensierten Massen nicht einheitlich. Derartige Probleme sind beim sogenannten Schmelzflußverfahren geringer. Hier werden aus gemahlenem Festharz, Härter sowie den Füll- und Zusatzstoffen Vorgemenge hergestellt, die dann auf Walzen oder in Knetern weiterverarbeitet werden. Dabei schmilzt das Harz durch den durch die Friktion bedingten Energieeintrag, imprägniert die Füllstoffe und wird weitgehend im gewünschten Maße vorkondensiert. Das so entstehende Produkt wird abgekühlt und die erhaltene spröde Masse gemahlen. Dabei entstehen hohe Staubanteile und die härtbaren Formmassen müssen zusätzlich gesiebt und gesichtet werden.

Weiterhin sind für verschiedene Produkte auf Epoxidharzbasis unterschiedliche Herstellungsmöglichkeiten bekannt (PATENT ABSTRACT OF JAPAN vol. 012, no. 443 (C-543), 15. November 1988 & JP 63 1610 18 A ; EP 0 309 410 A2; DE 41 01 048 A1). Die DE 4320209 A beschreibt ein herkömmliches Verfahren zur Herstellung von Phenolharzformmassen.

Es ist daher Aufgabe der Erfindung, diese Nachteile zu vermeiden, d.h., ein wirtschaftliches Verfahren zur Herstellung von duroplastischen Formmassen bereitzustellen, bei dem in möglichst wenig Arbeitsschritten unter möglichst geringem Energieeintrag ein gleichmäßig kondensiertes und gut reproduzierbares Produkt entsteht, das zu einer gewünschten Korngröße gemahlen oder granuliert wird, ohne daß dabei hohe Staubanteile entstehen.

Die Lösung der Aufgabe erfolgt durch Verfahren gemäß der Ansprüche 1-10.

Es wurde gefunden, daß ein ganz einfaches Herstellungsverfahren für Formmassen darin bestehen kann, daß das zumindest partiell geschmolzene Harz einem vorgemischten Gemenge aus Füllstoffen und/oder Fasern, Zusatzstoffen und, soweit notwendig, dem Härter zudosiert und mit ihm intensiv vermischt wird. Es entsteht dabei eine gute Benetzung und Imprägnierung der Füllstoffe und Fasern und eine homogene Durchmischung. Die eingebrachte Friktionsenergie ist sehr gering, da sich die Temperaturerhöhung der Mischung im wesentlichen aus der Abkühlung der Harzschmelze ergibt. Dies ist insbesondere günstig, wenn direkt die in der Produktion der Harze anfallende Schmelze eingesetzt wird.

Überraschenderweise aber bilden sich bei diesem Verfahren keine Verklebungen und keine spröden Brocken, sondern ein rieselfähiges, kleinkörniges Produkt, das sich ohne nennenswerten Staubanfall auf die gewünschte Korngröße zerkleinern läßt. Somit werden durch dieses einfache Verfahren mehrere Arbeitsvorgänge eingespart. Da das Mischungsverfahren schonender ist als die vorgeschilderten Verfahren, werden insbesondere lange Fasern weniger in Mitleidenschaft gezogen, d.h. aus den erfindungsgemäß hergestellten Formmassen lassen sich Formkörper mit verbesserter Schlag- und und Kerbschlagfestigkeit herstellen.

In der einfachen Ausführungsform der vorliegenden Erfindung wird der Mischvorgang so gesteuert, daß die Temperatur im Mischwerkzeug, d.h. demnach auch die Temperatur der hergestellten Formmasse unter der Anspringtemperatur der Härtungsreaktion bleibt.

Dem Stand der Technik entsprechend ist es üblich, bei der Herstellung der Formmassen, insbesondere solchen auf Basis von Phenolharzen, die Harze auf einen gewünschten höheren Härtungsgrad einzustellen, um das Fließverhalten der Massen den entsprechenden Verarbeitungsmaschinen anzupassen. Es wurde gefunden, daß dies auch bei dem erfindungsgemäßen Verfahren in einfacher Weise möglich ist, wenn das Verfahren so durchgeführt wird, daß die Temperatur im Mischwerkzeug und damit die Temperatur der hergestellten Formmasse die Anspringtemperatur der Härtung übersteigt, und der Mischvorgang so lange erfolgt, bis der gewünschte Härtungsgrad erreicht ist. Dann wird der Mischvorgang gestoppt und die erhaltene Formmasse möglichst schnell unter die Anspringtemperatur gekühlt. Erhalten wird auch hier ein rieselförmiges Granulat mit einheitlicher Korngröße und gut reproduzierbarem Härtungsgrad.

Die Zusammensetzung der erfindungsgemäß hergestellten Formmassen entspricht herkömmlichen Formmassen auf Basis duroplastischer Bindemittel, d.h., sie bestehen aus in der Wärme härtbaren Bindemitteln, üblichen Füllstoffen (wie z.B. Kreide, Clays, Titandioxid, Lithopone, Siliciumdioxid oder Schwerspat) und/oder Fasern (wie z.B. Cellulose-, Holz-, Glas-Kunststoffasern und gegebenenfalls Zusatzstoffen wie z.B. Pigmenten, Härtungsbeschleunigern, Stabilisatoren sowie Gleit- und Trennmitteln). Bindemittel sind einerseits selbsthärtende Harze oder Harzgemische oder Harz-Härter-Gemische. Wichtig ist dabei, daß die Anspringtemperatur zur Härtung der Bindemittel oberhalb ihres Schmelzpunktes liegt. Zu den entsprechenden Harztypen gehören Phenol-, Harnstoff- und Melaminharze, sowie entsprechende Mischkondensate, aber auch ungesättigte Polyester, Polyamide, Polydiallylphthalate oder Epoxidharze. Bevorzugte Bindemittel sind Novolak-Harze und Hexamethylentetramin (Hexa) als Härter, wobei im insbesondere bevorzugten Fall das eingesetzte Novolak-Harz eine Mischung aus Novolaken unterschiedlichen chemischen Aufbaus (Novolak auf Basis von Phenol und/oder Bisphenolen) und/oder unterschiedlichen Kondensationsgrades ist.

Die Harze werden, zumindest teilweise im geschmolzenen Zustand, in einem schnellaufenden Mischwerkzeug zu einem Vorgemisch aus Füll- und Zusatzstoffen zugegeben und intensiv vermischt. Es ist auch möglich, ein Harzgemisch einzusetzen, das aus einem aufgeschmolzenen Harz und bis zu 40 Gew.-% eines nicht aufgeschmolzenen, pulverförmigen Harzes besteht.

Sofern das Harz einen Härter benötigt, ergeben sich dabei mehrere Möglichkeiten: Entweder wird der Härter mit den Füllstoffen und/oder Fasern und Zusatzstoffen vorgemischt und dann als Bestandteil der Vormischung mit dem flüssigen Harz vermischt, oder der Härter wird mit dem Harz aufgeschmolzen bzw. in der Harzschmelze gelöst und diese Bindemittelschmelze wird mit dem Vorgemisch aus Füllstoffen und/oder Fasern und Zusatzstoffen vermischt. Bevorzugt allerdings werden zuerst die Füllstoffe und/oder Fasern sowie die Zusatzstoffe miteinander vermischt, zu dieser Mischung wird die Harzschmelze zudosiert und untergemischt und in die so hergestellte Mischung wird der Härter in flüssiger oder fester Form eingemischt.

Das erfindungsgemäße Verfahren - mit Ausnahme der gegebenenfalls erfolgenden Vormischung der Harze - wird in einem einzigen Mischwerkzeug durchgeführt. Geeignet sind schnellaufende Mischwerkzeuge, bei denen die Möglichkeit besteht, das Mischgut auch zu temperieren. Beispiele sind schnellaufende Intensivmischer mit Umfangsgeschwindigkeiten vᵤ > 5 m/s, Mehrfachwellendissolver, Turbo- oder Hochleistungsschleudermischer.

Die Mischung der festen Komponenten Füllstoffe und/oder Fasern sowie der Zusatzstoffe und gegebenenfalls des Härters erfolgt innerhalb von 0,5-30 min. Sie ist so zu steuern, daß die Temperatur der Vormischung innerhalb der gewünschten Grenzen verbleibt. Gegebenenfalls muß die Mischvorrichtung gekühlt werden.

Die Temperaturgrenzen der Vormischung sind abhängig von der gewünschten Verfahrensdurchführung: Wird die Formmasse so hergestellt, daß die Komponenten nur miteinander vermischt werden, ohne daß das Harz härtet, so soll die Temperatur der Vormischung vor der Zugabe des Harzes unterhalb von 70 °C, bevorzugt unterhalb von 50 °C bleiben. Soll hingegen das Harz in der Formmasse im Mischer zu einem gewünschten Härtungsgrad partiell gehärtet werden, so muß die Temperatur der Vormischung vor der Zugabe des Harzes unterhalb von 100 °C, bevorzugt unterhalb von 70 °C bleiben.

Ohne Unterbrechung des Mischvorganges wird der Vormischung die Harz- oder Harz-Härter-Schmelze zudosiert. Die dabei resultierende Temperatur der Mischung ergibt sich im wesentlichen aus der thermischen Energie der Schmelze. Wird keine partielle Härtung des Harzes gewünscht, so muß die Temperatur im Mischwerkzeug unter der Anspringtemperatur der Härtungsreaktion bleiben.

Soll hingegen das Harz in der Formmasse einen höheren Härtungsgrad haben als das eingebrachte Harz, so muß die Temperatur im Mischwerkzeug die Anspringtemperatur der Härtungsreaktion übersteigen. Dies kann durch folgende Maßnahmen erreicht und gesteuert werden: Erhöhung der Temperatur der Vormischung und/oder der Harzschmelze, Erhöhung der Umdrehungsgeschwindigkeit der Mischaggregate im Werkzeug, Verlängerung der Mischzeit, Erhöhung der Friktion der Mischung. Letzteres kann in einfacher Weise durch Zugabe von thixotropierend wirkenden Mitteln wie Bentonite, hochdisperser Kieselsäure oder Ruß erfolgen. Eine einfache Möglichkeit, die Friktion einer derartigen Mischung zu erhöhen, besteht darin, der Mischung bis zu 4 % Gew.-% Wasser zuzugeben. Sobald die Anspringtemperatur im Mischer überschritten ist, findet die Härtungsreaktion statt. Sie ist direkt meßbar an der erhöhten Stromabnahme durch den Mischer. Bei Erreichen der Stromabnahme, die dem gewünschten Härtungsgrad des Harzes entspricht, wird der Mischvorgang gestoppt und die erhaltene Formmasse möglichst schnell unter die Anspringtemperatur gekühlt. Dies erfolgt im einfachsten Fall dadurch, daß die Formmasse schnell in einen Bunker entleert wird.

### Beispiele

### Beispiel 1

In einem Mischwerkzeug (Inhalt 300 l) mit einem Schleudermischwerk mit fester Drehzahl von 155 U/min (Vᵤ= 5,26 m s⁻¹) werden
32,0 kg Aluminiumoxidhydrat
11,0 kg Glasfaser
17,0 kg Kreide
0,6 kg Peroxidzubereitung
1,0 kg Titandioxid
2,0 kg Calziumstearat
0,1 kg Farbpaste
0,3 kg Gleitmittel
eingewogen und 30 s lang intensiv vermischt. Die Vormischung ist homogen und hat eine Temperatur von ca. 30 °C. Unter Beibehaltung der Mischtemperatur werden innerhalb von 5 min 16 kg einer Polyesterharzschmelze mit einer Temperatur von 130 °C (Viskosität bei 150 °C:3.000 cP) zudosiert.

Bei unverminderter Mischergeschwindigkeit wird 5 min gerührt. Die erhaltene Masse hat eine Temperatur von 50 °C und wird durch den aufklappbaren Boden des Mischers in einen Bunker abgelassen.

Die Innenwand des Mischers ist sauber und alle Mischwerkzeuge sind blank. Die erhaltene Formmasse ist homogen und staubarm rieselfähig. Die einzelnen Teilchen haben eine durchschnittliche Größe von 1-2 mm.

### Beispiel 2

In einem Mischwerkzeug (Inhalt 300 l) mit einem Schleudermischwerk mit einer variablen Drehzahl und einem Tannenbaumwirbler mit einer festen Drehzahl von 3000 U/min wird eine Formmasse nach folgender Verfahrensvariante hergestellt:

Folgende Rohstoffe:
15,5 kg Holzmehl
10,5 kg Kreide
10,5 kg Kaolin
2,0 kg Magnesiumoxid
0,5 kg Ruß
4,0 kg Hexa
0,1 kg Wachs
2,0 kg Wasser
werden im Mischer vorgelegt und bei einer Drehzahl von 200 U/min 25 min lang gemischt. Die Vormischung hat dann eine Temperatur von etwa 60 °C.

25 kg Phenolharzschmelze (160 °C) werden innerhalb von 2 min unter Rühren zugegeben. Die Temperatur steigt über 100 °C und die Härtungsreaktion springt an. Nach etwa 5 min erfolgt eine rasche Erhöhung der Stromaufnahme von ca. 11 A auf 35 A. Die gewünschte Vorhärtung ist erreicht.

Der Mischer wird gestoppt und die Formmasse schlagartig durch Öffnen der Bodenklappe des Mischers in einen Bunker entleert.

Nach Abkühlen wird das rieselfähige Produkt zu einer einheitlichen Korngröße granuliert oder gemahlen und gesiebt. Eine nennenswerte Staubentwicklung tritt nicht auf. Ebenso ist der nicht verwertbare Feinkornanteil vernachlässigbar gering.

Mit der so hergestellten Formmasse werden in an sich bekannter Weise Spritz- und Preßteile hergestellt, die nach optischer Beurteilung einwandfrei sind.

## Patentansprüche

1. Verfahren zur Herstellung von Formmassen aus Bindemitteln, Füllstoffen und/oder Fasern und gegebenenfalls Zusatzstoffen, wobei die Bindemittel Harze bzw. Harz-Härter-Gemische sind, die oberhalb einer Anspringtemperatur, die oberhalb des Schmelzpunktes des Harzes liegt, aushärten, **dadurch gekennzeichnet, daß** in einem schnellaufenden Mischwerkzeug die Füll- und Zusatzstoffe sowie gegebenenfalls der Härter vorgemischt werden, in diese Vormischung das Harz oder Bindemittelgemisch auf Basis von zumindest einem Phenolharz, das zumindest partiell als Schmelze vorliegt, eingebracht und intensiv vermischt wird, wobei die Temperatur im Mischwerkzeug unter der Anspringtemperatur der Härtungsreaktion bleibt.

2. Verfahren zur Herstellung von Formmassen aus Bindemitteln, Füllstoffen und/oder Fasern und gegebenenfalls Zusatzstoffen, wobei die Bindemittel Harze bzw. Harz-Härter-Gemische sind, die oberhalb einer Anspringtemperatur, die oberhalb des Schmelzpunktes des Harzes liegt, aushärten, **dadurch gekennzeichnet, daß** in einem schnellaufenden Mischwerkzeug die Füll- und Zusatzstoffe sowie gegebenenfalls der Härter vorgemischt werden, in diese Vormischung das Harz oder Bindemittelgemisch auf Basis von zumindest einem Phenolharz, das zumindest partiell als Schmelze vorliegt, eingebracht und intensiv vermischt wird, wobei die Temperatur im Mischwerkzeug die Anspringtemperatur der Härtungsreaktion übersteigt, so daß eine Härtung des Bindemittels erfolgt, die beim gewünschten Härtungsgrad abgebrochen wird, indem der Mischvorgang gestoppt und die erhaltene Formmasse möglichst schnell unter die Anspringtemperatur gekühlt wird.

3. Verfahren nach den Ansprüchen 1 oder 2, **dadurch gekennzeichnet, daß** zuerst die Füllstoffe und/oder Fasern sowie die Zusatzstoffe miteinander vermischt werden und dann der Härter zudosiert und untergemischt wird.

4. Verfahren nach Anspruch 1, **dadurch gekennzeichnet, daß** die Temperatur der Vormischung vor der Zugabe der Harzschmelze unterhalb 70 °C liegt.

5. Verfahren nach Anspruch 2, **dadurch gekennzeichnet, daß** die Temperatur der Vormischung vor der Zugabe der Harzschmelze unterhalb 100 °C liegt.

6. Verfahren nach einem der Ansprüche 2 bis 5, **dadurch gekennzeichnet, daß** als Bindemittel Novolak-Harz und Hexamethylentetramin verwendet werden.

7. Verfahren nach Anspruch 6, **dadurch gekennzeichnet, daß** das eingesetzte Novolak-Harz eine Mischung aus Novolaken unterschiedlichen chemischen Aufbaus und/oder unterschiedlichen Kondensationsgrades ist.

8. Verfahren nach Anspruch 2, **dadurch gekennzeichnet, daß** die Erhöhung der Temperatur der Mischung über die Anspringtemperatur durch Friktionswärme erfolgt.

9. Verfahren nach Anspruch 8, **dadurch gekennzeichnet, daß** der Mischung zur Erhöhung der Friktion Wasser zugegeben wird.

10. Verfahren nach einem der Ansprüche 1 bis 9, **dadurch gekennzeichnet, daß** die Abkühlung der Formmasse durch schnelle Entleerung in einen Bunker erfolgt.

## Claims

1. Process for the preparation of moulding compounds comprised of bonding agents, filler substances and/or fibres and optionally additive substances, the bonding agents being resins or mixtures of resin and curing agent which cure above an onset temperature above the melting point of the resin, **characterized in that** the filler substances and additive substances and optionally the curing agent are premixed in a high speed mixing apparatus, and the resin or bonding agent mixture based on at least one phenolic resin present at least partially in the form of a melt is introduced into this premix with thorough mixing, the temperature in the mixing apparatus remaining below the onset temperature of the curing reaction.

2. Process for the preparation of moulding compounds comprised of bonding agents, filler substances and/or fibres and optionally additive substances, the bonding agents being resins or mixtures of resin and curing agent which cure above an onset temperature above the melting point of the resin, **characterized in that** the filler substances and additive substances and optionally the curing agent are premixed in a high speed mixing apparatus, and the resin or bonding agent mixture based on at least one phenolic resin present at least partially in the form of a melt is introduced into this premix with thorough mixing, the temperature in the mixing apparatus exceeding the onset temperature of the curing reaction so that curing of the bonding agent takes place which is stopped when the desired degree of curing is reached by the mixing process being stopped and the obtained moulding compound being cooled below the onset temperature as rapidly as possible.

3. Process according to Claim 1 or 2, **characterized in that** first the filler substances and/or fibres as well as the additive substances are mixed and then the curing agent is added and mixed.

4. Process according to Claim 1, **characterized in that** the temperature of the premix before the resin melt is added is below 70°C.

5. Process according to Claim 2, **characterized in that** the temperature of the premix before the resin melt is added is below 100°C.

6. Process according to one of Claims 2 to 5, **characterized in that** novolak resin and hexamethylenetetramine are used as bonding agents.

7. Process according to Claim 6, **characterized in that** the novolak resin used is a mixture comprising novolaks of different chemical structure and/or different degree of condensation.

8. Process according to Claim 2, **characterized in that** increasing the temperature of the mixture above the onset temperature takes place through frictional heat.

9. Process according to Claim 8, **characterized in that** water is added to the mixture to increase the friction.

10. Process according to one of Claims 1 to 9, **characterized in that** the cooling of the moulding compound takes place through rapid emptying into a tank.

## Revendications

1. Procédé de fabrication de pâtes de moulage constituées de liants, de charges et/ou de fibres et éventuellement d'additifs, les liants étant des résines ou des mélanges de résine et de durcisseur qui durcissent au-dessus d'une température d'amorçage située au-dessus du point de fusion de la résine, **caractérisé en ce que** les charges et additifs ainsi qu'éventuellement le durcisseur sont prémélangés dans un outil de mélange à rotation rapide, **en ce qu'**au cours de ce prémélange, la résine ou le mélange de liants à base d'au moins une résine phénolique qui se présente au moins en partie à l'état fondu est introduit et mélangé intensivement, la température dans l'outil de mélange restant en dessous de la température d'amorçage de la réaction de durcissement.

2. Procédé de fabrication de pâtes de moulage constituées de liants, de charges et/ou de fibres et éventuellement d'additifs, les liants étant des résines ou des mélanges de résine et de durcisseur qui durcissent au-dessus d'une température d'amorçage située au-dessus du point de fusion de la résine, **caractérisé en ce que** les charges et additifs ainsi qu'éventuellement le durcisseur sont prémélangés dans un outil de mélange à rotation rapide, **en ce qu'**au cours de ce prémélange, la résine ou le mélange de liants à base d'au moins une résine phénolique qui se présente au moins en partie à l'état fondu est introduit et mélangé intensivement, la température dans l'outil de mélange étant située au-dessus de la température d'amorçage de la réaction de durcissement de telle sorte qu'ait lieu un durcissement du liant qui est interrompu lorsque le degré de durcissement souhaité est atteint en arrêtant l'opération de mélange et en refroidissant aussi rapidement que possible la pâte de moulage ainsi obtenue en dessous de la température d'amorçage.

3. Procédé selon les revendications 1 ou 2, **caractérisé en ce que** les charges et/ou les fibres ainsi que les additifs sont d'abord mélangés ensemble, le durcisseur étant ensuite ajouté et mélangé.

4. Procédé selon la revendication 1, **caractérisé en ce que** la température du prémélange avant l'addition de la résine fondue est située en dessous de 70° C.

5. Procédé selon la revendication 2, **caractérisé en ce que** la température du prémélange avant l'addition de la résine fondue est située en dessous de 100° C.

6. Procédé selon l'une des revendications 2 à 5, **caractérisé en ce que** comme liant, on utilise une résine novolaque et de l'hexaméthylène tétramine.

7. Procédé selon la revendication 6, **caractérisé en ce que** la résine novolaque utilisée est un mélange de novolaques de différentes structures chimiques et/ou de différents degrés de condensation.

8. Procédé selon la revendication 2, **caractérisé en ce que** l'augmentation de la température du mélange au-dessus de la température d'amorçage est obtenue par la chaleur de frottement.

9. Procédé selon la revendication 8, **caractérisé en ce que** de l'eau est ajoutée au mélange pour augmenter la chaleur de frottement.

10. Procédé selon l'une des revendications 1 à 9, **caractérisé en ce que** le refroidissement de la pâte de moulage s'effectue par vidange rapide dans une cuve.
